# EUROPÄISCHE PATENTSCHRIFT

(11) **EP 0 719 193 B1**
(45) Veröffentlichungstag und Bekanntmachung des Hinweises auf die Patenterteilung: **28.10.1998**
(21) Anmeldenummer: 94922833.2
(22) Anmeldetag: 29.07.1994
(51) Int. Cl.: B23B 27/14

(54) **SCHNEIDEINSATZ**
CUTTING INSERT
PLAQUETTE

(30) Priorität: 13.09.1993 DE 4330816; 22.10.1993 DE 4336055
(43) Veröffentlichungstag der Anmeldung: 03.07.1996
(73) Patentinhaber: Widia GmbH, 45145 Essen (DE)
(72) Erfinder: STALLWITZ, Erwin, D-91586 Lichtenau (DE); AGUSTIN PAYA, José, D-45479 Mülheim (DE); MADER, Klaus, D-45472 Mülheim (DE); RETZKOWSKI, Dirk, D-45884 Gelsenkirchen (DE)
(74) Vertreter: Vomberg, Friedhelm, Dipl.-Phys.
(86) Internationale Anmeldenummer: DE9400896
(87) Internationale Veröffentlichungsnummer: WO9507783

(56) Entgegenhaltungen:
- EP-A- 0 534 450
- EP-A- 0 555 192
- EP-A- 0 587 109
- US-A- 4 140 431
- DATABASE WPI Section PQ, Week 9145, 2. Januar 1992 Derwent Publications Ltd., London, GB; Class P54, AN 91-330852 & SU,A,1 577 180 (MOGIL STROMAVTOLINI) 15. Mai 1991

## Beschreibung

Die Erfindung betrifft einen Schneideinsatz zur spanbildenden Bearbeitung, insbesondere zum Drehen, Fräsen, Stechen und Bohren eines Werkstückes, dessen mindestens einseitige Deckfläche die Spanfläche mit mindestens einer Schneidkante und dessen umlaufenden Seitenflächen mindestens eine Freifläche bilden, die in einem Abstand von der Schneidkante z. B.als Ausnehmungen ausgebildete Freiflächenelemente aufweist.

Ein solcher Schneideinsatz ist aus der EP 0 555 192 A1 bekannt. Dort wird ein Sonderwerkzeug beschrieben, bei dem für bestimmte Freiflächenabschnitte ein positiver Freiwinkel vorgesehen ist. Dieser Schneideinsatz besitzt eine Hauptschneidkante sowie eine Nebenschneidkante, die mit der Hauptschneidkante einen Winkel von 0,5° bis 4° bildet. Unterhalb der Hauptschneidkante ist ein Freiflächenabschnitt vorgesehen, der mit der Spanfläche einen rechten Winkel bildet. Unterhalb dieses Freiflächenabschnittes schließen sich Freiflächenabschnitte an, die im unteren Teil durch Schleifarbeiten nachzuarbeiten sind. Zwischen jeweils außenliegenden Freiflächenabschnitten ist zur Begrenzung der Schleifarbeit auf ein Minimum eine Ausnehmung vorgesehen.

Schneideinsätze der eingangs genannten Art haben zumeist eine ebene Freifläche unter einem Freiwinkel zwischen 0° bis 30°.

Die EP 0 457 488 A1 beschreibt einen Schneideinsatz für einen Bohrer mit vier Schneidecken, der zwei auf gegenüberliegenden Seiten des Schneideinsatzes liegende Freiflächen mit jeweils einem sich an die Schneidecke anschließenden Vorsprung, einer abfallenden Flanke und einem gegenüber dem Vorsprung zurückgesetzten Teil aufweist. Dieser zurückgesetzte Teil besteht aus einem ersten sich an die Schneidkante anschließenden Bereich unter einem ersten positiven Winkel von 7° bis 20°, einem zweiten Bereich, der sich an die untere bodenseitige Kante anschließt und der unter einem zweiten positiven aber deutlich kleineren Winkel geneigt ist und einem dritten, die genannten Bereiche verbindenden Bereich. Der zweite, untere Bereich ist großflächig und dient als Anlage an der Seitenwand der Werkzeugauflage des Bohrers. Mit dieser Ausbildung soll bei kleinerem Freiwinkel eine sicherere Abstützung gegeben sein.

Beim Bohren mit Schneideinsätzen werden die Schneideinsätze gegenüber der Bohrlochlängsachse in ihren Auflagen unter einem Winkel angeordnet, d.h., leicht gekippt, um so eine größere Bohrerstabilisierung zu erzielen und Vibrationen zu verhindern.

Zur Schneidkantenstabilisierung ist die Anordnung einer negativen Phase auf der Spanfläche oder die Minimierung des Freiwinkels vorgeschlagen worden.

In der DE 38 39 804 A1 ist eine insbesondere für Schlichtmesserköpfe bestimmte Wendeschneidplatte dargestellt und beschrieben, mit der besonders glatte rillen- und riefenfreie Oberflächen beim Fräsen erzielt werden sollen. Diese Wendeschneidplatte besitzt gekrümmte Schneidkanten mit einem wesentlich größeren Radius als die Schneidkantenlänge mit entsprechend gewölbten Schneidenflächen sowie ebenen Anlageflächen, deren Kontur parabel- oder hyperbelähnlich ist.

Die EP 0 414 241 A2 beschreibt einen Schneideinsatz, dessen Spanfläche die Schneidkante durchbrechende im Querschnitt trapezförmige Absenkungen aufweist, woran sich in der Freifläche und über ihre gesamte Länge erstreckend senkrecht zur Schneidkante liegende Nuten anschließen.

Die DE-U1-76 00 988 zeigt eine Schneideinsatzplatte mit einem gezahnten Schneidkantenprofil, wobei die Zahnung ebenfalls über die gesamte Freifläche reicht. Entsprechendes gilt für die Schneideinsatzausformungen nach der EP 0 141 576 B1 und US 5 158 401 A.

Nuten mit sich in einer Schneidkantennormalenrichtung verjüngender Breite beschreibt die EP 0 213 494. Schließlich beschreibt die EP 0 094 921 einen Schneideinsatz mit Nuten in gegenüberliegenden Seitenflächen, wobei die Nuten Seitenwände aufweisen, von denen eine schräg zu der anderen verläuft, so daß sich eine unterschiedliche Trapezformbreite in unterschiedlichen Parallelen zur Schneidkante ergeben.

In der EP 0 534 450 A2 wird ein Schneideinsatz beschrieben, der in seiner Freifläche bis zum Boden durchgezogene und die dortige Kante durchbrechende Ausnehmungen aufweist, die eine Tiefe besitzen sollen, die der zweifachen maximalen Verschleißmarkenbreite entspricht. Die Ausnehmungen sollen allein dazu dienen, Kühlmittel bis in die Schneidkantennähe fördern zu können.

Es ist daher Aufgabe der Erfindung, den eingangs genannten Schneideinsatz in seiner Geometrie so zu optimieren, daß seine Schneidwirkung verbessert wird. Dabei soll sein Schnittverhalten durch eine bessere Führung und weitere Minderung der Vibration beruhigt werden, wobei insbesondere eine Reduzierung des Freiflächenverschleißes, eine Reduzierung der Ratterneigung und eine Reduzierung der Schnittnormalenkräfte (senkrecht auf die Maschinenspindel) erreicht werden soll, wodurch eine Erhöhung der Standzeit möglich wird. Außerdem soll eine Begrenzung der Verschleißmarkenbreite erzielt werden. Der Schneideinsatz soll möglichst auf pulvermetallurgischem Wege durch Sintern und/oder heißisostatisches Pressen ohne Nachbearbeitung herstellbar sein.

Diese Aufgabe wird durch die im Patentanspruch 1 gekennzeichneten Merkmale gelöst.

Dabei ist vorgesehen, daß die Freifläche in einem vorgegebenen Abstand von der der Freifläche zugeordneten Schneidkante eine oder mehrere als Ausnehmungen mit einer Tiefe zwischen 0,03 mm und 0,3 mm und/oder pyramiden- oder pyramidenstumpfförmige Erhebungen ausgebildete Freiflächenelemente gleicher oder unterschiedlicher Ausbildung aufweist. Hierdurch reduziert sich die Verschleißneigung und es wird erreicht, daß die Freifläche entlang der Schnittkante bzw. entlang der Freifläche im Normalschnitt unterschiedliche Freiwinkel aufweist. Die Übergänge können sowohl konkav, konvex oder auch gerade sein. Nach der Erfindung weist die an die Schneidkante angrenzende Freifläche eine Kontaktzone auf, die während des Zerspanens an dem Werkstück anliegt. Diese Kontaktzone, die annähernd mit gleicher Höhe unterhalb der Schneidkante liegt, hat eine Mindesthöhe von 0,05 mm. Die Ausnehmungen reichen bis in die Kontaktzone hinein, unterbrechen diese also im unteren Teil.

Die Höhe der Kontaktzone und/oder der Abstand der Ausnehmungen von der Schneidkante beträgt 0,05 mm bis 1 mm, vorzugsweise bis 0,2 mm. Die Erhebungen als Freiflächenelemente reichen bis an die Schneidkante heran oder haben einen Abstand zur Schneidkante bis zu 1,5 mm. Vorzugsweise beträgt der Abstand 0,1 bis 1 mm.

Mindestens ein Freiflächenelement ist vorzugsweise konvex oder konkav, d.h. muldenförmig, gekrümmt.

Die obengenannten Ausnehmungen können in unterschiedlichsten Freiflächenformen angeordnet sein. Bevorzugt sind die Freiflächen jedoch gekrümmt oder besitzen zumindest eine Kontaktzone, etwa dadurch, daß die Kontaktzone bis auf die Ausnehmungen im wesentlichen eben ist und sich hieran mit einem größeren positiven Winkel ein nächstes Freiflächenstück anschließt.

Der erste positive Freiwinkel der Kontaktzone ist 5° größer als der Freiwinkel des sich anschließenden Freiflächenabschnittes, wobei dieser zweite Winkel, der ggf. als variabler Tangentialwinkel (bei balliger Ausführung) gemessen wird, zwischen 5° und 30° liegt.

Die Freiflächenelemente sind - in einer Draufsicht betrachtet - bevorzugt rund, rechteckig oder dreieckig, länglich-rund oder länglich-oval, wobei nach einer Ausgestaltung die Längsachse der Ausnehmungen mit der Schneidkantennormalen auf der Freifläche einen Winkel zwischen 0° und 45°, vorzugsweise 0° bis 10°, bildet. Die Ausnehmungen können bezüglich ihrer Längsachse parallel oder unterschiedlich gekippt angeordnet sein. Bevorzugt wird ein Profil der Ausnehmungen, das als Teil eines Zylinders mit Halbkugelkopf, eines Kegels oder eines anderen rotationssymmetrischen Körpers definiert ist, der vorzugsweise einen Durchmesser von 0,5 mm bis 20 mm, weiterhin vorzugsweise 7 mm bis 14 mm besitzt. Die Ausnehmungen können gleich lang oder unterschiedlich lang sein. Die Freiflächenelemente, insbesondere Ausnehmungen, können bis zur Basisfläche durchgezogen sein bzw. bis dort hin angrenzen, womit ihr Abstand 0 mm wird, vorzugsweise beträgt der Abstand bis zur halben Freiflächenhöhe oder er liegt zwischen 0,5 mm bis 1 mm.

Die auf einer parallelen zur Schneidkante gemessene Breite der Freiflächenelemente beträgt nach einer besonderen Ausgestaltung der Erfindung zwischen 1/10 bis 1/3 der Schneidkantenlänge und/oder der auf derselben Linie gemessene Abstand der Ausnehmungen 1/10 bis 1/2 der Schneidkantenlänge. Die obengenannten Abstände und Breiten definieren zwangsläufig die Anzahl der Ausnehmungen pro Freifläche.

Nach einer weiteren Ausgestaltung der Erfindung sind die Breite und/oder der Abstand der Freiflächenelemente über der gesamten Freifläche gleich groß. Die Ausnehmungen können jedoch auch unterschiedlich breit und/oder unterschiedliche Abstände voneinander besitzen, wenn hierbei die Schnittbedingungen optimiert werden können. Insbesondere ist es möglich, daß alle Breiten und alle Abstände der Ausnehmungen unterschiedliche Maße haben. Bevorzugt werden die Ausnehmungen jedoch symmetrisch zur Schneidkantenmittelnormalen auf der Freifläche angeordnet sein.

Bei Erhebungen als Freiflächenelemente werden Pyramiden- oder Pyramidenstumpfformen bevorzugt. Diese Formen können entweder regelmäßig oder auch ungleichmäßig bzw. unsymmetrisch sein, insbesondere zwei längere Basisseitenkanten aufweisen, die in einem Winkel von 5° bis 30°, vorzugsweise 10 bis 20° zueinander geneigt sind, während die kurzen Basisseitenkanten parallel zueinander und zur Schneidkante liegen. Nach einer weiteren Ausgestaltung der Erfindung sind die Erhebungen keilförmig und besitzen eine obere Gratkante als Schnittlinie zweier geneigter tetraedischer Seitenflächen, wobei die Endpunkte der Gratkante die oberen Eckpunkte jeweiliger geneigter dreieckiger Seitenflächen sind. Die Pyramidenstumpfdachfläche kann eben oder gewölbt bzw. die Gratkante linear oder gekrümmt ausgebildet sein. Bevorzugt wird eine Wölbung oder Krümmung, die (gleichmäßig) konvex oder konkav ist. Nach einer weiteren Ausgestaltung der Erfindung kann der Pyramidenstumpf in einer Draufsicht auch spiegelasymmetrisch in bezug auf seine Längsachse ausgebildet sein. Ebenso kann die Pyramidendachfläche in bezug auf die Freifläche schrägwinklig ausgerichtet sein. Die Pyramiden- oder Pyramidenstumpfseitenflächen sind eben oder leicht konvex oder konkav gewölbt ausgebildet. Bevorzugt werden die Pyramiden- oder Pyramidenstumpfseitenflächen begrenzenden Kanten jeweils abgerundet. Die Neigung zweier keine gemeinsame Kante besitzenden Pyramidenseitenflächen zueinander liegt zwischen einem Winkel von 30 bis 60°, vorzugsweise 35 bis 50°.

Nach einer bevorzugten Ausführung der Erfindung besitzt die Freifläche im Normalschnitt unterschiedliche Freiwinkel, insbesondere ist die Kontaktzone im wesentlichen über ihre Höhe gesehen eben und besitzt einen ersten positiven Freiwinkel, woran sich ein Freiflächenbereich mit einem zweiten positiven Freiwinkel anschließt, der, ggf. als variabler Freiwinkel ausgestaltet, zwischen 5° und 30° liegt, vorzugsweise 2° bis 5° kleiner als der erste Freiwinkel ist. Die Übergänge zwischen den unter verschiedenen Freiwinkeln angeordneten Freiflächenabschnitten sind konkav, konvex und/der gerade ausgebildet.

Ausführungsbeispiele der Erfindung sind in den Zeichnungen dargestellt. Es zeigen
- Fig. 1: in einer schaubildlichen Ansicht einen ersten Schneideinsatz nach der Erfindung mit vier Schneidkanten,
- Fig. 2: eine weitere Ausführungsform des Schneideinsatzes mit Ausnehmungen in der balligen Freifläche,
- Fig. 2a: einen Schnitt längs Linie A - A nach Fig. 1,
- Fig. 2b: einen Schnitt längs Linie B - B nach Fig. 2,
- Fig. 2c: eine Teilkantenseitansicht auf die Freifläche,
- Fig. 3: eine weitere Ausführungsform eines Schneideinsatzes in Form eines Stechwerkzeuges mit balliger Freifläche,
- Fig. 3a: eine Seitenansicht auf das Werkzeug nach Fig. 3 beim Einstechen einer Welle,
- Fig. 4 und 5: einen Schneideinsatz mit unterschiedlich großen Ausnehmungen in der Freifläche,
- Fig. 6: einen Schneideinsatz mit unterschiedlich geneigten Ausnehmungen in der Freifläche,
- Fig. 6a: einen Schnitt längs Linie A - A nach Fig. 6,
- Fig. 6b: einen Schnitt längs Linie B - B nach Fig. 6 und
- Fig. 7 und 8: in schaubildlichen Ansichten weitere Ausführungsformen des Schneideinsatzes.
- Fig. 9: verschiedene Ansichten von Freiflächenerhebungen.

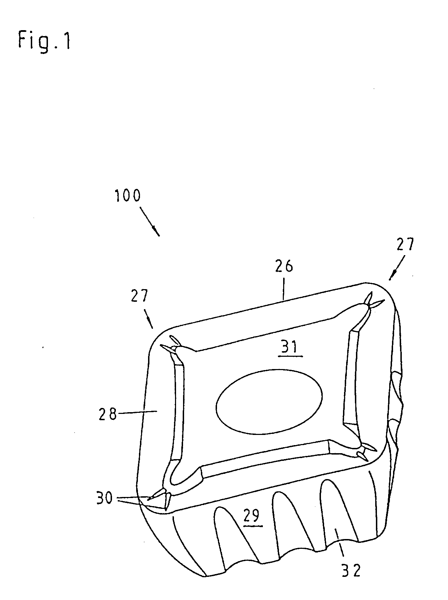

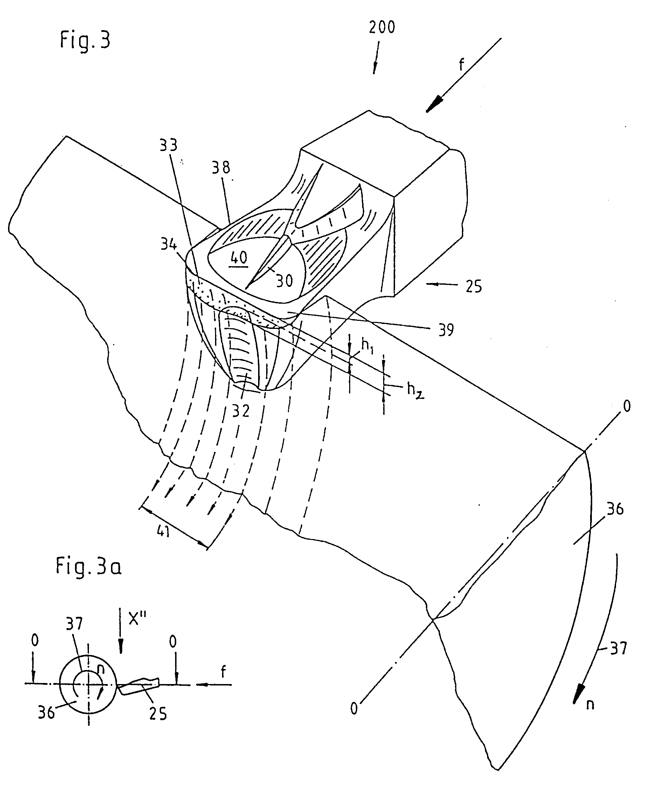

In Fig. 1 ist ein Ausführungsbeispiel eines Schneideinsatzes 100 dargestellt. Die im Sinne der vorliegenden Erfindung in Betracht kommenden Schneideinsätze können unterschiedliche Formgestaltungen haben, wie insbesondere rechtwinklig-viereckig, rhombisch, dreieckig, rund oder sechseckig. Ebenso sind Ausbildungen als Stechwerkzeuge 25 (siehe Fig. 3) möglich. Jeder der genannten Schneideinsätze besitzt mindestens eine Schneidkante 26, die entweder als Gerade, als konvexe Kurve oder konkave Kurve oder in Wellenform ausgebildet sein kann. Die Schneidkante wird seitlich durch Schneidecken 27 begrenzt und ist ferner die Grenzlinie zwischen der Spanfläche 28 und der Freifläche 29, die im Sinne der Erfindung in einer senkrechten Richtung zur Schneidkante gekrümmt verlaufend ausgebildet ist. Die Schneideinsätze 20 bis 25 können auf ihrer Spanfläche Spanformelemente in Form von Nuten oder erhabenen Spanformelementen 30 besitzen. Die Spanfläche kann zu ihrem Zentrum hin abgesenkt oder als erhabenes Mittelteil 31 ausgebildet sein. Nach Fig. 1 gehen von dem erhabenen Mittelteil 31 spiegelsymmetrisch zu einer Spanflächendiagonalen Längsrippen 30 aus, die in Richtung der Schneidkante 26 weisen. Die Ausbildung dieser Längsrippen und Keile 30 ist Gegenstand der DE-P 41 36 417.1, auf die hier Bezug genommen wird.

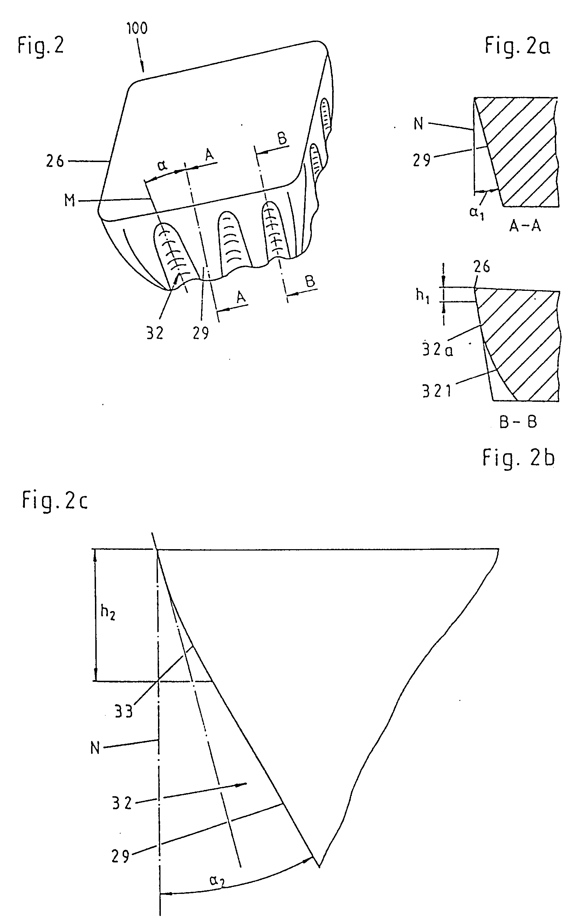

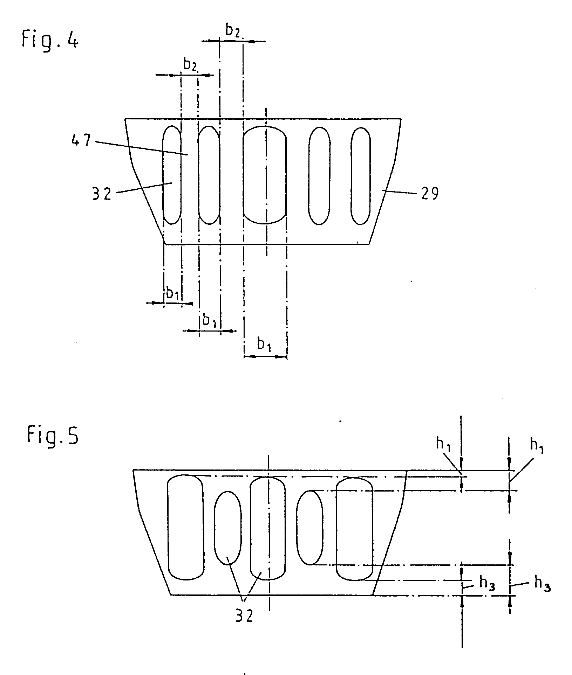

Nach einer weiteren Ausführungsform des Schneideinsatzes 100 (siehe Fig. 2) besitzt dessen Freifläche 29 Ausnehmungen 32, deren Gestaltung nach oben hin konisch spitz zulaufend, wie in Fig. 2 dargestellt, oder länglich-rund bzw. länglich-oval sein kann, worauf in der Erläuterung zu Fig. 4 bis 6 noch eingegangen wird. Dabei kann eine Neigung der Längsmittelachse M zu einer Schneidkantennormalen N mit einem Winkel α zwischen 0 und ± 30° vorgesehen werden. Die Freifläche kann ballig ausgeführt sein, wie in Fig. 2 dargestellt, oder - in einer Schnittansicht nach Fig. 2a - mit Ausnahme der Freiflächenelementbereiche eben sein. Die Schnittansicht nach Fig. 2a zeigt eine ebene Freifläche 29, die zu der Schneidkantennormalen N einen Winkel α₁ aufweist. Wie Fig. 2b ausweist, besitzt der obere Rand der Ausnehmung 32, bei dem die Basis 321 in die Freifläche 29 übergeht, einen Abstand h₁ von der Schneidkante 26.

Insbesondere kann der Schneideinsatz so ausgelegt sein, daß über die Höhe h₂ (siehe Fig. 2c) die Freifläche mit dem zu zerspanenden Werkstück in Kontakt steht, d.h. eine Kontaktzone 33, ausbildet. Die Höhe h₃ dieser Kontaktzone 33 ist mindestens so groß wie die Höhe h₁, kann jedoch auch größer sein, so daß die Ausnehmungen 32 die ebene oder gekrümmte Kontaktzone 33 partiell unterbrechen. Die Ausnehmung 32 kann dabei auch, wie in Fig. 2c dargestellt, in bezug auf ihre Vertikalerstreckung im wesentlichen geradlinig unter einem Winkel α₂ (>α₁) verlaufen.

Bei der in Fig. 3 dargestellten Ausführungsform des Schneideinsatzes 200 als Stecheinsatz 25 besitzt dieser eine Hauptschneidkante 34, an die sich auf der Freifläche mit einer Höhe h₂ die bereits beschriebene Kontaktzone 33 anschließt. Aus Fig. 3 ist bei der Bearbeitung des Werkstückes 36, das mit einer Drehzahl n in Richtung des Pfeiles 37 gedreht wird, ersichtlich, daß aufgrund der balligen konvexen Form das Schneidwerkzeug nur im Bereich der Kontaktzone 33 mit der Freifläche am Werkstück anliegt. Der Schneideinsatz besitzt Nebenschneidkanten 38, die in spitzem Winkel aufeinander zulaufen. Der Schneideinsatz kann noch mit einer Fase vorgesehen sein oder, wie dargestellt, rippenförmige Spanformelemente 30 besitzen, wovon hier nur eines angeordnet ist, was senkrecht auf die Hauptschneidkantenmitte zuweist. Hinter der Fase 39, die in den Schneidecken eine größte Breite besitzt und sich sowohl zur Hauptschneidkantenmitte als auch in Richtung der Nebenschneiden zunächst verjüngt, ist eine Spanformmulde 40 vorgesehen. Der Stecheinsatz 25 wird mit dem Vorschub f bewegt. Wie dargestellt, bildet die Kontaktzone 33 auf dem Werkstück 36 eine Gleitzone 41 beim Einstechen einer Nut. Die Höhe der Kontaktzone h₂ wächst mit zunehmendem Verschleiß der Freifläche.

Sämtliche Freiflächen können mit Freiflächenelementen ausgestaltet sein, auf die anhand der Fig. 4 bis 6c näher eingegangen werden soll.

In einer mit zwei unter unterschiedlichen Freiflächenwinkeln ausgestatteten Bereichen ausgeformten Freifläche 29 sind länglich-ovale Ausnehmungen 32 unterschiedlicher Breiten b₁ vorgesehen, wobei die Breiten der Ausnehmungen von der Schneidkantenmittelnormalen in der Freifläche zur Schneidecke hin abnehmen, d.h., die Ausnehmungen 32 schmaler werden. In entsprechender Weise ändern sich die bei 47 dargestellten Abstände b₂ der Ausnehmungen 32 jeweils zur Schneidecke hin zu kleineren Werten. Die Ausnehmungen 32 nach Fig. 4 sind gleich lang und besitzen jeweils einen gleichen Abstand von der Schneidkante bzw. zum Boden.

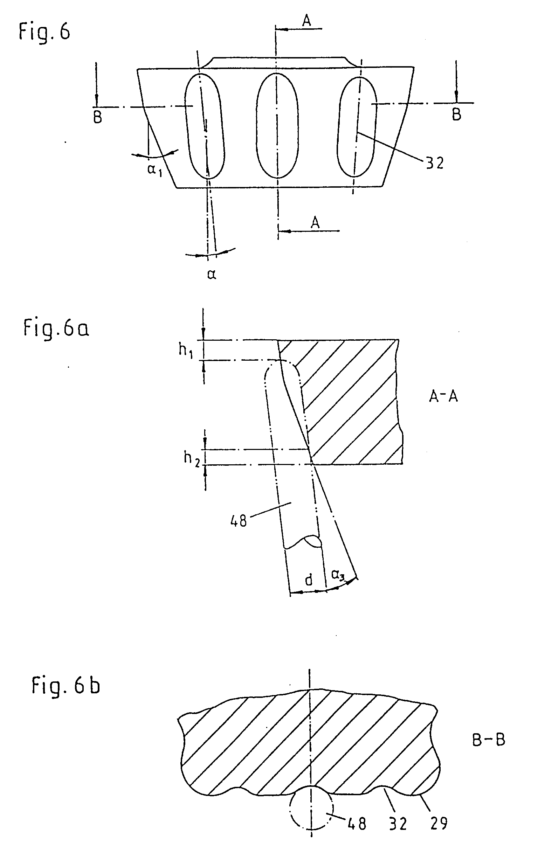

Die Ausnehmungen 32 nach Fig. 5, die zwar äquidistant und gleich ausgebildet sind, besitzen hingegen unterschiedliche Längen, woraus unterschiedliche Abstände h₁ zur Schneidkante bzw. Abstände h₂ zur Bodenfläche resultieren. Allerdings sind auch solche Ausnehmungen im Sinne der Erfindung denkbar, die unterschiedliche Breiten und unterschiedliche Abstände, wie in Fig. 4 dargestellt, bei unterschiedlichen Längen haben. Bevorzugte Maße für die Abstände h₁ sind 0,05 mm bis 0,2 mm, wohingegen h₂ 0,5 mm bis 1 mm betragen sollen. Für die Breiten der Ausnehmungen 32 wird vorzugsweise ein Maß verwendet, das 1/10 bis 1/3 der Schneidkantenlänge beträgt, wohingegen die Abstände 1/10 bis 1/2 der Schneidkantenlänge betragen sollen. In einer weiteren, nicht dargestellten Ausführungsform wechseln jeweils Ausnehmungen kleinerer mit Ausnehmungen größerer Breite, die auch asymmetrisch zur Schneidkantenmittelnormalen auf der Freifläche angeordnet sein können. Entsprechendes gilt für die Abstände der Ausnehmungen 32 von der Schneidkante bzw. vom Boden, die jeweils gleich groß, unterschiedlich, abwechselnd größer und kleiner oder auch steigende oder fallende Werte haben können.

In einer weiteren Ausführungsform nach Fig. 6 sind die Ausnehmungen 32 unterschiedlich gegen eine Schneidkantennormalen geneigt. Während die mittlere Ausnehmung 32 mit ihrer Längsachse etwa senkrecht zur Schneidkante steht, beträgt der Neigungswinkel α der daneben angeordneten Ausnehmungen 32 bis zu 45°, vorzugsweise bis zu 10°. Dem Schnitt nach Fig. 6a kann die Art der Formgebung für die Ausnehmung 32 entnommen werden. Die Ausnehmungen 32 sind demnach so gestaltet, daß ein imaginärer Zylinderkörper 48 mit einem oberen Kugelkopf hier teilweise eingelegt werden kann. Statt des Zylinderkopfes sind auch andere Rotationskörper, wie Kegel, denkbar. Der betreffende Neigungswinkel α₃, den eine imaginäre Zylinderlängsachse gegen die Freifläche bildet, liegt zwischen 10° und 30°, vorzugsweise 5° unter dem Freiwinkel α₁. Der Durchmesser d des Imaginärkörpers beträgt 0,5 mm bis 20 mm, vorzugsweise 7 mm bis 14 mm. In einer Schnittlinie B - B ist, wie aus Fig. 6b ersichtlich, die Freifläche durch die entsprechenden Ausnehmungen 32 wellig geformt.

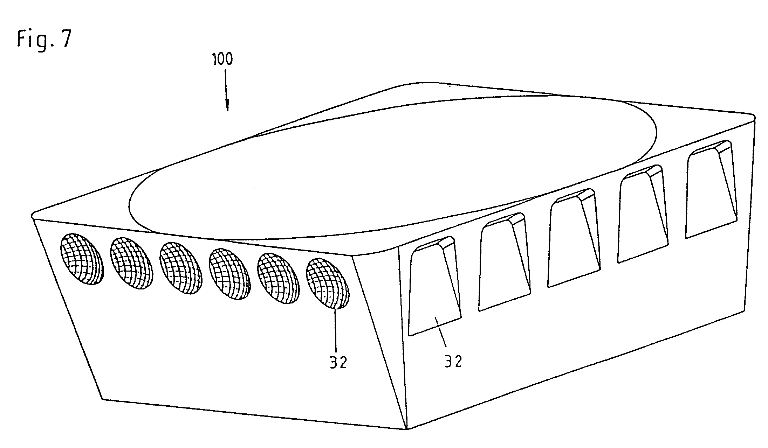

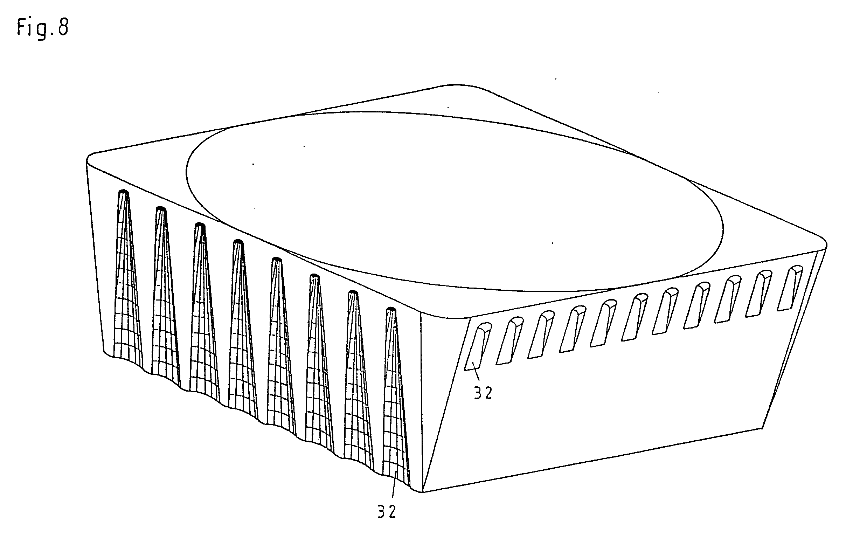

Bei den in Fig. 7 und 8 dargestellten Ausführungsformen des Schneideinsatzes 100 ist deutlich zu erkennen, daß die Ausnehmungen 32 eine runde, kegelstumpf förmige oder andere geeignete geometrische äußere Grundformen aufweisen können, wobei die Ausnehmung selbst konkav, konvex, teilzylindrisch oder teilelliptisch gekrümmt ausgebildet sein kann, wobei auch eine gerade, zur Schneidkante hin nach innen geneigte Formgebung vorgesehen werden kann. Die Ausnehmungen können dabei auf der Freifläche begrenzt ausgebildet sein oder bis zu einer Randkante der Freifläche an der Basis des Schneideinsatzes verlaufen.

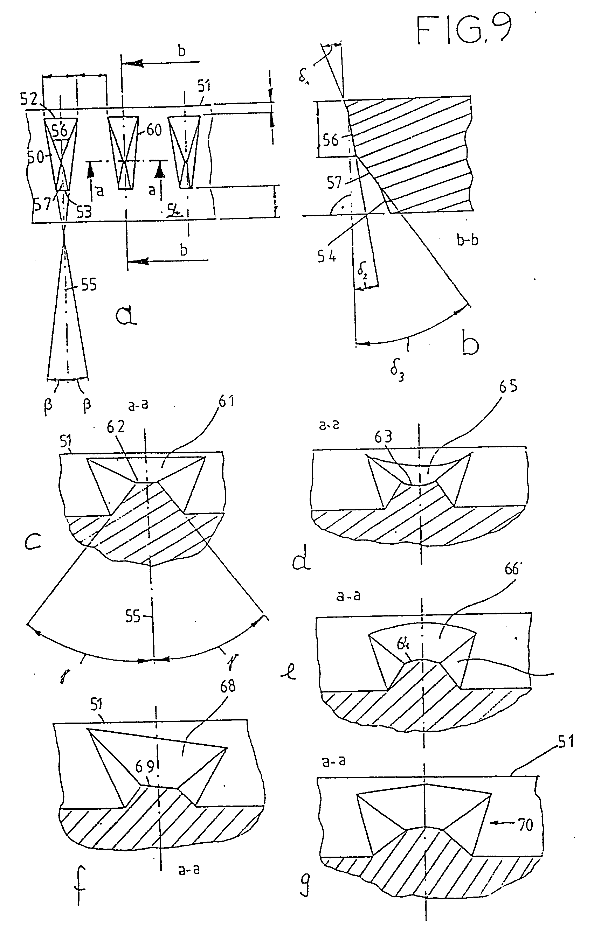

Der in Fig. 9 dargestellte Ausschnitt aus einer Freiflächendraufsicht zeigt Erhebungen 50, die pyramidenförmig ausgebildet sind. Diese Pyramidenform besitzt vier zueinander geneigte Seitenflächen, wobei die parallel zur Schneidkante 51 liegenden kürzeren Grenzlinien 52 und 53 zwischen der Freifläche 54 und entsprechenden Pyramidenseitenflächen parallel zur Schneidkante 51 liegen, aber unterschiedlich lang sind. In entsprechender Weise sind die mit einer längeren Basis ausgestatteten Seitenflächen nicht exakt senkrecht zur Schneidkante 51 ausgerichtet, sondern stehen leicht geneigt zueinander, wobei der Neigungswinkel β zwischen 10° und 20° liegt. In bezug auf die Längsachse 55 der Pyramide 50 muß jedoch der Winkel β nicht beidseitig gleich groß sein, d.h. es sind auch asymmetrische Pyramiden- oder Pyramidenstumpf formen möglich.

Einen Pyramidenstumpf 60 mit einem Schnitt a-a zeigt beispielsweise Fig. 9c. Dieser Pyramidenstumpf besitzt eine ebene parallel zur Schneidkante 51 liegende ebene Seitenfläche 61, die in eine Gratkante 62 mündet oder begrenzt wird von einer Pyramidenstumpfdachfläche. Die Neigung der beiden Seitenflächen, die im wesentlichen senkrecht zur Schneidkante 51 stehen, beträgt 30 bis 60°, wobei der Neigungswinkel γ in bezug auf die Längsachse 55 nicht für jede Seitenfläche gleich groß sein muß. Die Gratkante oder die Pyramidenstumpfdachfläche kann auch konkav (siehe 63 in Fig. 9d) oder konvex (siehe 64 in Fig. 9e) ausgebildet sein. In entsprechender Weise sind die Seitenflächen 65 und 66 ebenfalls konkav oder konvex ausgebildet, wobei die im wesentlichen senkrecht zur Schneidkante liegenden Seitenflächen 67 hierbei ebenfalls konvex oder konkav oder entsprechend anders gewölbt ausgebildet sein können.

Wie dem Schnitt von 9b zu entnehmen ist, sind die jeweiligen Neigungswinkel der Seitenflächen 56 und 57 durch den Basisfreiwinkel δ₁ der Freifläche vorgegeben. So liegt der Neigungswinkel δ₂ zwischen 0° bis δ₁ -3° bzw. der Neigungswinkel der Seitenfläche 57 ist bis zu 60°, vorzugsweise bis zu 45° größer als der Neigungswinkel der Freifläche 56 bzw. (bei symmetrischer Ausbildung) gleich groß.

Eine asymmetrische Formgestaltung zeigt Fig. 9f, bei der die vordere Pyramidenstumpfseitenfläche 68 im Hinblick auf die Schneidkante 51 schräggestellt ist. In entsprechender Weise endet auch die obere Gratkante 69 bzw. Dachfläche schräggestellt.

Fig. 9g zeigt ein Schneidelement 70, welches facettenartig ausgebildet ist. Die maximale Breite der erhabenen Formelemente liegt zwischen 0,3 mm bis 1,5 mm, vorzugsweise zwischen 0,5 mm bis 1 mm.

## Patentansprüche

1. Schneideinsatz (100; 200) zur spanbildenden Bearbeitung, insbesondere zum Drehen, Fräsen, Stechen und Bohren eines Werkstückes (36), dessen mindestens einseitige Deckfläche die Spanfläche (28) mit mindestens einer Schneidkante (26) und dessen umlaufenden Seitenflächen mindestens eine Freifläche (29, 54) bilden, die in einem Abstand (h₁) von der Schneidkante (26; 34) ein oder mehrere Freiflächenelemente aufweist, dadurch gekennzeichnet, daß die Freiflächenelemente Ausnehmungen (32) mit einer Tiefe zwischen 0,03 mm bis 0,3 mm und/oder pyramiden- oder pyramidenstumpfförmige Erhebungen (50, 60) sind, wobei die an die Schneidkante (26; 34, 51) angrenzende Freifläche (29) eine Kontaktzone (33) besitzt, die während des Zerspanens an dem Werkstück (36) anliegt, und die Ausnehmung (32), falls anwesend, bis in die Kontaktzone (33) hineinreicht und wobei die Höhe (h₂) der Kontaktzone (33) und/oder ein Abstand (h₁) der falls anwesenden Ausnehmungen (32) von der Schneidkante (26; 34) 0,05 mm bis 1 mm, vorzugsweise 0,05 mm bis 0,2 mm und/oder ein Abstand der falls anwesenden Erhebungen (50, 60) von der Schneidkante 0 mm bis 1,5 mm, vorzugsweise 0,1 mm bis 1 mm beträgt.

2. Schneideinsatz nach Anspruch 1, dadurch gekennzeichnet, daß die Höhe (h₂) der Kontaktzone (33) und/oder ein Abstand (h₁) der Ausnehmungen (32) von der Schneidkante 0,05 mm bis 0,2 mm und/oder ein Abstand der Erhebungen (50, 60) von der Schneidkante 0,1 mm bis 1 mm beträgt.

3. Schneideinsatz nach Anspruch 1 oder 2, dadurch gekennzeichnet, daß mindestens ein Freiflächenelement (32, 50, 60) konvex oder konkav gekrümmt ist und/oder daß die Freiflächenelemente (32, 50, 60) unterschiedlich lang sind und/oder daß die Freiflächenelemente (32, 50, 60) in einer Draufsicht länglich-rund oder länglich-oval, im wesentlichen rund, rechteckig oder dreieckig sind, wobei vorzugsweise die Längsachse (M) der Freiflächenelemente (32) mit der Schneidkantennormalen (N) auf der Freifläche (29) einen Winkel (α₂) zwischen 0° und 45°, vorzugsweise 0° bis 10°, bildet.

4. Schneideinsatz nach einem der Ansprüche 1 bis 3, dadurch gekennzeichnet, daß die Ausnehmungen (32) ein Profil aufweisen, das als Teil eines Zylinders (48) mit Halbkugelkopf, eines Kegels oder eines anderen rotationssymmetrischen Körpers definiert ist, der vorzugsweise einen Durchmesser (d) zwischen 0,5 mm bis 20 mm, weiterhin vorzugsweise zwischen 7 mm und 14 mm, besitzt.

5. Schneideinsatz nach einem der Ansprüche 1 bis 4, dadurch gekennzeichnet, daß der Abstand (h₃) der Ausnehmungen (32) von der Basisfläche bis zur halben Freiflächenhöhe oder 0 mm bis 1 mm, vorzugsweise 0,5 mm bis 1 mm, beträgt und/oder daß die auf einer Parallelen zur Schneidkante gemessene Breite (b₁) der Ausnehmungen (32) zwischen 1/10 bis 1/3 der Schneidkantenlänge zwischen zwei Schneidecken (27) oder 0,3 mm bis 1,5 mm beträgt.

6. Schneideinsatz nach einem der Ansprüche 1 bis 5, dadurch gekennzeichnet, daß der auf einer Parallelen zur Schneidkante gemessene Abstand (b₂) der Ausnehmungen (32) zwischen 1/10 bis 1/2 der Schneidkantenlänge zwischen zwei Schneidecken (27) beträgt, wobei vorzugsweise die Breite (b₁) und/oder der Abstand (b₂) der Ausnehmungen (32) über der gesamten Freifläche (29) gleich groß ist.

7. Schneideinsatz nach einem der Ansprüche 1 bis 6, dadurch gekennzeichnet, daß die Ausnehmungen (32) und/oder Erhebungen unterschiedlich breit sind und/oder unterschiedliche Abstände voneinander haben und/oder alle Breiten (b₁) und Abstände (b₂) unterschiedliche Maße haben und/oder daß die Ausnehmungen (32) symmetrisch zur Schneidkantenmittelnormalen auf der Freifläche (29) angeordnet sind.

8. Schneideinsatz nach einem der Ansprüche 1 bis 7, dadurch gekennzeichnet, daß die pyramidenstumpfförmigen Erhebungen (50, 60) einen ungleichmäßigen Pyramidenstumpf mit zwei unterschiedlich langen gegenüberliegenden Basisseitenkanten bilden, vorzugsweise dergestalt, daß die längeren Basisseitenkanten einen Winkel (β) von 5° bis 30°, weiterhin vorzugsweise von 10° bis 20° bilden und/oder daß die Erhebungen (60) keilförmig mit einer oberen Gratkante (62) als Schnittlinie zweier geneigter tetraedischer Seitenflächen und mit Endpunkten, die die oberen Eckpunkte jeweiliger geneigter dreieckiger Seitenflächen (56, 57) bilden.

9. Schneideinsatz nach einem der Ansprüche 1 bis 8, dadurch gekennzeichnet, daß die Pyramidenstumpfdachfläche gewölbt oder die Gratkante (63, 64) gekrümmt ausgebildet ist, wobei vorzugsweise die Wölbung oder Krümmung konvex oder konkav ist.

10. Schneideinsatz nach einem der Ansprüche 1 bis 9, dadurch gekennzeichnet, daß der Pyramidenstumpf in einer Draufsicht spiegelasymmetrisch in bezug auf seine Längsachse ist und /oder daß die Pyramidendachfläche (69) in bezug auf die Freifläche schrägwinklig ausgerichtet ist und/oder daß die Pyramiden- oder Pyramidenstumpfseitenflächen (65, 66, 67) eben oder leicht konvex oder konkav gewölbt sind.

11. Schneideinsatz nach einem der Ansprüche 1 bis 10, dadurch gekennzeichnet, daß die die Pyramiden- oder Pyramidenstumpfseitenflächen begrenzenden Kanten jeweils abgerundet sind und/oder daß zwei Pyramidenseitenflächen in einem Winkel (γ) von 30° bis 60°, vorzugsweise 35° bis 50°, zueinander geneigt sind.

12. Schneideinsatz nach einem der Ansprüche 1 bis 11, dadurch gekennzeichnet, daß die Freifläche im Normalschnitt unterschiedliche Freiwinkel (α₁, α₂) aufweist, wobei vorzugsweise die Kontaktzone (33) im wesentlichen über ihre Höhe (h₂) gesehen eben ist und einen ersten positiven Freiwinkel (α₁) bildet und daß die sich an die Kontaktzone (33) anschließende Freifläche (29) einen zweiten positiven Winkel (α₂), ggf. als variablen Freiwinkel, bildet, der zwischen 5° und 30° liegt, vorzugsweise 2° bis 5° kleiner als der erste Freiwinkel (α₁) ist, und/oder daß die Übergänge zwischen den unter verschiedenen Freiwinkeln (α₁, α₂) angeordneten Freiflächenabschnitten konkav, konvex und/oder gerade ausgebildet sind.

## Claims

1. Cutting insert (100; 200) for chip-removing machining, in particular for turning, milling, grooving, and boring of a workpiece (36), having on at least one side a cutting surface (28) with at least one cutting edge (26) and surrounding side surfaces of which form at least one free face (29, 54), which has at a spacing (h₁) from the cutting edge (26; 34) one or more free face elements characterised in that the free face elements are recesses (32) with a depth between 0,03 mm and 0,3 mm and/or pyramidal or frustopyramidal projections (50, 60), whereby the free face (29) adjacent the cutting edge (26; 34, 51) has a contact zone (33) which lies during machining against the workpiece (36), and the recess (32), if existing, extends into the contact zone (33) and whereby the height (h₂) of the contact zone (33) and/or a spacing (h₁) of the recess, of existing, from the cutting edge (26; 34) is 0,05 mm to 1 mm, preferably 0,05 mm to 0,2 mm and/or a spacing of projections (50, 60), if existing, from the cutting edge (26; 34) is 0 mm to 1,5 mm, preferably 0,1 mm to 1 mm.

2. Cutting insert according to claim 1, characterised in that a height (h₂) of the contact zone (33) and/or a spacing (h₁) of the recesses (32) from the cutting edge (26; 34) is 0,05 mm to 0,2 mm, and/or a spacing of the projections (50, 60) from the cutting edge is 0,1 mm to 1 mm.

3. Cutting insert according to one of claims 1 or 2, characterised in that at least one free face element (322, 50, 60) is curved convexly or concavely and/or that the fee face elements (32, 50, 60) are of different lengths and/or that the free face elements (32, 50, 60) are in top view elongatedly circular or elongated oval, generally round, rectangular or triangular, whereby preferably the longitudinal axis (M) of the free face elements (32) forms with a perpendicular (N) to the cutting edge on the free face (29) an angle (α₂) between 0° and 45°, preferably 0° to 10°.

4. Cutting insert according to one of claims 1 to 3, characterised in that the recesses (32) define a shape that is part of a cylinder (48) with a semispherical head, a cone, or another rotation-symmetrical body, which preferably has a diameter (d) between 0,5 mm and 20 mm, preferably between 7 mm and 14 mm.

5. Cutting insert according to one of claims 1 to 4, characterised in that the spacing (h₃) of the recesses (32) from the base surface is equal to half the free face height or 0 mm to 1 mm, preferably 0,5 mm to 1 mm and/or that the measured parallel to the cutting edge the width (b₁) of the recesses (32) is equal to between 1/10 to 1/3 of the cutting-edge length between two cutting corners (27) or 0,3 mm to 1,5 mm.

6. Cutting insert according to one of claims 1 to 5, characterised in that measured parallel to the cutting edge the spacing (b₂) of the recesses (32) is equal to between 1/10 to 1/2 of the length of the cutting edge between two cutting corners (27), whereby preferably the width (b₁) and/or the spacing (b₂) of the recesses (32) is the same over the entire free face (29).

7. Cutting insert according to one of claims 1 to 6, characterised in that the recesses (32) and/or projections are of different widths and/or are differently spaces from one another and/or that all widths (b₁) and spacings (b₂) are different and/or that the recesses (32) are arranged symmetrically to a perpendicular to the center of the cutting edge on the free face (29).

8. Cutting insert according to one of the claims 1 to 7, characterised in that the frustopyramidal projections (50, 60) form an irregular frustopyramid with two opposite base side edges of different length preferably such that the longer base side edges form an angle (β) of 5° to 30°, preferably 10° to 20° and/or that the projections (60) are wedge shaped with an upper ridge edge (62) as a border between two inclined tetrahedral side surfaces and with end points that form the upper corners of two respective inclined triangular side faces (56, 57).

9. Cutting insert according to one of claims 1 to 8, characterised in that the roof surface of the frustopyramid is curved or the ridge edge (63, 64) is arced, whereby preferably the curvature or arc is convex or concave.

10. Cutting insert according to one of claims 1 to 9, characterised in that the frustopyramid is in top view axially asymmetrical relative to its longitudinal axis and/or that the pyramid roof surface (69) is inclined with respect to the free face and/or that the pyramid or frustopyramid side faces (65, 66, 67) are planar or lightly convex or concave.

11. Cutting insert according to one of claims 1 to 10, characterised in that the edges delimiting the pyramid or frustopyramid side faces are rounded and/or that two pyramid side faces are inclined to each other at an angle (γ) of 30° to 60°, preferably 35° to 50°.

12. Cutting insert according to one of claims 1 to 11, characterised in that the free face has in perpendicular section different free angles (α₁, α₂), whereby preferably the contact zone (33) is generally planar with respect to its height (h₂) and forms a first positive free angle (α₁) and that free face (29) adjacent to the contact zone (33) forms a second positive angle (α₂), if necessary as a variable free angle which is between 5° and 30°, preferably 2° to 5 less than the first free angle (α₁) and/or that the transitions between the land sections arranged at various lower free angles (α₁, α₂) to each other are formed concave, convex, and/or straight.

## Revendications

1. Insert de coupe (100; 200) destiné à l'usinage par enlévement de copeaux, en particulier au tournage, au fraisage, à saigner et au perçage d'une pièce (36), dont la surface supérieure au moins unilatérale forme la face de coupe (28) avec un tranchant (26) du moins et dont les surfaces latérales périphériques forment une face de dépouille (29, 54) du moins qui - à une distance (h₁) du tranchant (26; 34) - présente un ou plusieurs éléments de face de dépouille, caractérisé par le fait que les éléments de la face de dépouille sont des évidements (32) ayant une profondeur comprise entre 0,03 mm et 0,3 mm et/ou des élévations (50, 60) ayant la forme de pyramides ou de troncs de pyramide, la face de dépouille (29) adjacente au tranchant (26; 34, 51) possédant une zone de contact (33) qui, durant l'enlèvement de copeaux, s'appuie sur la pièce (36), et l'évidement (32), s'il existe, s'étendant jusque dans la zone de contact (33), et la hauteur (h₂) de la zone de contact (33) et/ou une distance (h₁) des évidements (32), s'ils existent, du tranchant (26; 34) étant comprise entre 0,05 mm et 1 mm, de préférence entre 0,05 mm et 0,2 mm et/ou une distance des élévations (50, 60), si elles existent, du tranchant étant comprise entre 0 mm et 1,5 mm, de préférence entre 0,1 mm et 1 mm.

2. Insert de coupe selon la revendication 1, caractérisé par le fait que la hauteur (h₂) de la zone de contact (33) et/ou une distance (h₁) des évidements (32) du tranchant est comprise entre 0,05 mm et 0,2 mm et/ou une distance des élévations (50, 60) du tranchant est comprise entre 0,1 mm et 1 mm.

3. Insert de coupe selon la revendication 1 ou 2, caractérisé par le fait qu'un élément (32, 50, 60) du moins de la face de dépouille est courbé de façon convexe ou concave et/ou que les éléments (32, 50, 60) de la face de dépouille présentent des longueurs différentes et/ou que les éléments (32, 50, 60) de la face de dépouille, vus de dessus, présentent une forme oblongue-ronde ou oblongue-ovale, pour l'essentiel ronde, rectangulaire ou triangulaire, de préférence, l'axe longitudinal (M) des éléments (32) de la face de dépouille formant avec la nomrale (N) au tranchant, sur la face de dépouille un angle (α₂) compris entre 0° et 45°, de préférence entre 0° et 10°.

4. Insert de coupe selon l'une des revendications 1 à 3, caractérisé par le fait que les évidements (32) présentent un profil qui est défini en tant que partie d'un cylindre (48) avec une tête hémisphérique, d'un cône ou d'un autre corps à symétrie de révolution, qui, de préférence, présente un diamètre (d) compris entre 0,5 mm et 20 mm, de plus de préférence entre 7 mm et 14 mm.

5. Insert de coupe selon l'une des revendications 1 à 4, caractérisé par le fait que la distance (h₃) des évidements (32) s'étend de la surface de base jusqu'à la moitié de la hauteur de la face de dépouille ou est comprise entre 0 mm et 1 mm, de préférence entre 0,5 mm et 1 mm, et/ou que la largeur (b₁) des évidements (32), mesurée sur une paralléle au tranchant est comprise entre 1/10 et 1/3 de la longueur du tranchant entre deux coins de coupe (27) ou entre 0,3 mm et 1,5 mm.

6. Insert de coupe selon l'une des revendications 1 à 5, caractérisé par le fait que la distance (b₂) des évidements (32) mesurée sur une parallèle au tranchant est comprise entre 1/10 et 1/2 de la longueur du tranchant entre deux coins de coupe (27), de préférence, la largeur (b₁) et/ou la distance (b₂) des évidements (32) étant la même sur l'ensemble de la face de dépouille (29).

7. Insert de coupe selon l'une des revendications 1 à 6, caractérisé par le fait que les évidements (32) et/ou élévations présentent des largeurs différentes et/ou des distances différentes l'un(e) de l'autre et/ou que toutes les largeurs (b₁) et distances (b₂) ont des mesures différentes et/ou que les évidements (32) sont disposés symétriquement par rapport à la normale au milieu du tranchant sur la face de dépouille (29).

8. Insert de coupe selon l'une des revendications 1 à 7, caractérisé par le fait que les élévations (50, 60) en forme de troncs de pyramide forment un tronc de pyramide irrégulier avec deux arêtes latérales de base opposées et de longueur différente, de préférence de telle manière que les arêtes latérales de base plus longues forment un angle (β) compris entre 5° et 30°, de plus de préférence entre 10° et 20°, et/ou que les élévations (60) sont réalisées de façon cunéiforme avec une ligne d'arête supérieure (62) en tant que linge d'intersection de deux surfaces latérales inclinées tétraédriques et avec des points terminaux qui forment les points corniers supérieurs de surfaces latérales (56, 57) triangulaires inclinées respectives.

9. Insert de coupe selon l'une des revendications 1 à 8, caractérisé par le fait que la surface de toit du tronc de pyramide est arquée ou que la ligne d'arête (63, 64) est courbée, de préférence, le bombement ou la courbure étant convexe ou concave.

10. Insert de coupe selon l'une des revendications 1 à 9, caractérisé par le fait que le tronc de pyramide est, dans une vue de dessus, axialement asymétrique par rapport à son axe longitudinal et/ou que la surface de toit (69) du pyramide est orientée de façon inclinée par rapport à la face de dépouille et/ou que les surfaces latérales (65, 66, 67) du pyramide ou tronc de pyramide sont planes ou légèrement courbées de façon convexe ou concave.

11. Insert de coupe selon l'une des revendications 1 à 10, caractérisé par le fait que les arêtes limitant les surfaces latérales du pyramide ou tronc de pyramide sont respectivement arrondies et/ou que deux surfaces latérales de pyramide sont inclinées lune par rapport à l'autre dans un angle (γ) compris entre 30° et 60°, de préférence entre 35° et 50°.

12. Insert de coupe selon l'une des revendications 1 à 11, caractérisé par le fait que la face de dépouille présente en coupe normale des angles de dépouille différents (α₁, α₂), de préférence, la zone de contact (33) étant pour l'essentiel plane par rapport à sa hauteur (h₂) et formant un premier angle positif de dépouille (α₁), et que la face de dépouille (29) adjacente à la zone de contact (33) forme un deuxième angle positif (α₂), le cas échéant comme angle de dépouille variable, qui est compris entre 5° et 30°, de préférence 2° à 5° plus petit que le premier angle de dépouille (α₁), et/ou que les transitions entre les sections de la face de dépouille disposées sous des angles de dépouille différents (α₁, α₂) sont réalisées de façon concave, convexe et/ou droite.
